# EUROPEAN PATENT APPLICATION

(11) **EP 2 829 976 A1**
(43) Date of publication of application: **28.01.2015**
(21) Application number: 13765195.6
(22) Date of filing: 21.03.2013
(51) Int. Cl.: G06F 12/00, G06F 3/06

(54) **DISTRIBUTED STORAGE SYSTEM, STORAGE CONTROL METHOD AND PROGRAM**

(30) Priority: 22.03.2012 JP 2012065190
(71) Applicant: NEC Corporation, Tokyo 108-8001 (JP)
(72) Inventor: KOBAYASHI, Dai, Tokyo 108-8001 (JP); KAMIMURA, Junpei, Tokyo 108-8001 (JP); KAN, Masaki, Tokyo 108-8001 (JP); ICHIEN, Masumi, Tokyo 108-8001 (JP); SAKAE, Yoshiaki, Tokyo 108-8001 (JP)
(74) Representative: Vossius & Partner
(86) International application number: PCT/JP2013/058111
(87) International publication number: WO 2013/141308

(57) **Abstract**

A distributed storage system, comprises: a first data storage unit that holds data in a first data structure; a second data storage unit that holds the data in a second data structure different from the first data structure; an update information holding unit that holds an update information item(s) indicating update content of the data, and if a predetermined update condition is satisfied, applies the update information item(s) to the second data storage unit and reflects the update content in the second data storage unit; an update state monitoring unit that monitors the update information item(s) held by the update information holding unit and extracts as an update state an application status of the update information item(s) to the second data storage unit; and an update condition change unit that changes the predetermined update condition based on a change command for changing the predetermined update condition, the change command being determined in accordance with the update state. In the distributed storage system holding the same data in multiple different data structures, appropriate adjustment is performed of timing reflecting data updating in a data storage unit, in accordance with change in volume and frequency of access appropriate to respective data structures.

## Description

### [Field]

### (Reference to Related Application)

This application is based upon and claims the benefit of the priority of Japanese Patent Application No. 2012-065190 filed on March 22, 2012, the disclosure of which is incorporated herein in its entirety by reference thereto.

The present invention relates to a distributed storage system, a storage control method and a program, and in particular, to a distributed storage system that holds duplicates in different data structures, and a storage control method and program that control monitoring and adjustment of dynamic performance parameters.

### [Background]

Distributed storage technology is known whereby multiple computers are connected via a network, and data is held/utilized using a HDD (Hard Disk Drive) or memory of the respective computers. In distributed storage technology, a determination is made by software or special hardware as to which computer the data is arranged in, and by which computer the data is processed. By dynamically changing operations in accordance with system status, resource usage volume within the system is adjusted, and performance provided to a client computer is improved.

The data stored is accessed in semantic units. For example, in a relational database, data is written in units called records or tuples. In a file system, data is written as a set of blocks. Furthermore, with a Key-Value Store, data is written as objects. Data thus written is read in respective units thereof by the client computer.

With a device such as a HDD, memory or the like, which hold data, a unique number called an address is assigned to a space storing the data. Access to a region adjacent to the address is generally processed at high speed. Therefore, the data must be arranged in address spaces such that access is with contiguous addresses as much as possible, when records or blocks are used.

Therefore, data structures of stored data are important. Here, a data structure is a format where a data collection is arranged in address spaces.

For example, with a row-oriented relational database used in online transaction processing, writing is performed to a memory buffer or disk in units called pages in which multiple records are collected. A page is fixed length data in units that enable access by a disk or memory at high speed. This is because, in online transaction processing, updating, inserting and writing are performed in record units.

On the other hand, in a column-oriented relational database used in data analysis processing such as in a Data Warehouse or the like, respective records are resolved in units called columns or attributes, and the same attributes of respective records are arranged contiguously in address space. This is because in data analysis processing, usage is often according to attribute units. In the column-oriented database, in a case where there are many records having the same value for a certain attribute, these can be compressed into 1 data item to give good data storage efficiency.

As an example, Non Patent Literature 1 describes respective data structures of a row-oriented database and a column-oriented database.

In the abovementioned distributed storage technology, however, duplicates of the same data are stored in multiple computers. This is in order to provide stored data to a client computer even in a case where a certain computer has failed and the data storage apparatus is not accessible. In particular, where the storage apparatus is volatile memory such as DRAM (Dynamic Random Access Memory) or the like, due to the high probability of data in the computer in question being lost due to a power supply failure, a software failure or the like, in comparison with a magnetic device such as a HDD or nonvolatile memory such as an SSD (Solid State Drive), 3 or more data duplicates may be stored in different computers.

Technology is also known whereby multiple data duplicates are stored in mutually different data structures, and duplicates appropriate to respective access types are provided as access destinations for different types of access.

In a distributed storage method described in Patent Literature 1, with regard to duplication of data carried out when data is updated, data to be updated is converted to a specified goal data structure at a data node that is a duplication destination, and stored in a data storage unit; at this time the data node temporarily holds the data to be updated in an intermediate structure, returns a response with regard to updating, and converts the data to the goal data structure to be stored, asynchronously with respect to an update request.

On the other hand, distributed storage described in Patent Literature 2 is provided with respective data storage units, and is provided with multiple data nodes that are network-linked; in duplication of data carried out when data is updated, data to be updated is temporarily stored in an intermediate structure for holding write data, in a data node that is a duplication destination, and is converted to respective goal data structures and stored in the data storage units asynchronously with respect to an update request; an access history recording unit is provided that stores history of access frequency to the data nodes, and a means is provided that varies trigger information forming a trigger for conversion to a goal data structure performed asynchronously in the data nodes, based on access information recorded in the access history recording unit.

Duplication for fault tolerance requires synchronous updating. That is, it is necessary to communicate update completion to a client computer at a stage at which two duplication updates are completed. In a case of storing the same data in different data structures, one data structure may not be suited to access with small quantity data units, in comparison with the other data structure. For example, in a case where one data structure relates to a data update to a HDD and the other relates to a data update to memory, an update completion notice is not delivered to the client computer until the slower data structure is updated. Therefore, a user of the client computer feels that system performance has deteriorated.

Here, a method is known whereby a dedicated data structure is provided in which additions are performed at high speed, in a first stage of the slow data structure. For example, in technology described in Non Patent Literature 2, update information to a database is applied to a copy in memory, writing is performed by WAL (Write Ahead Logging) to a permanent device such as a HDD, and thereafter the WAL content is updated to a master database on the HDD. In a case where a fast update data structure is a data structure with a row-oriented storage format in memory, and a slow update data structure is a data structure with a column-oriented storage format in memory, by interleaving a FIFO (First-In First-Out) structure in memory holding update information in a first stage of a column-oriented storing format, it is possible to return an update completion response at high speed to the client computer. Thus, a structure element where update information to a data store (or a data storage unit) is temporarily held is called an "update information holding unit" below.

In a distributed storage system configured from a plurality of computers, monitoring is performed by a manager. In technology described in Non Patent Literature 3, CPU (Central Processing Unit) usage rate per unit time of a plurality of computers in a network and network packet transmission volume are represented on a Web screen.

### [Citation List]

### [Patent Literature]

[PTL 1]
   Japanese Patent Application No. JP 2011-050151
[PTL 2]
   Japanese Patent Application No. JP 2011-169588

### [Non Patent Literature]

[NPL 1]
   Kamimura, Junpei, et al., Design and Evaluation of a GPU Accelerated Column Store Database, Information Processing Society of Japan, IPSJ SIG Technical Report, Vol. 2011-HPC-130, No. 26, pp. 1-7, 2011 (in Japanese).
[NPL 2]
   C. Mohan, et al., "ARIES: A Transaction Recovery Method Supporting Fine-Granularity Locking and Partial Rollbacks Using Write-Ahead Logging," ACM Transactions on Database Systems (TODS), Vol. 17, No. 1, March 1992, pp. 94-162.
[NPL 3]
   Ganglia Monitoring System, [online], [search conducted March 8, 2012], Internet <URL: http://monitor.millennium.berkeley.edu/>
[NPL 4]
   Kitagawa, Genshiro, "Introduction to Time Series Modeling," pp. 120-123, Iwanami Shoten Publishers, 2005 (in Japanese).

### [Summary]

### [Technical Problem]

The entire contents of the abovementioned Patent Literature and Non Patent Literature are incorporated herein by reference. The following analysis is given by the present inventors.

In a distributed storage system, consideration is given to holding duplicates in a first data structure and a second data structure. Here, since the second data structure requires time for small volume updates, updating is done asynchronously using an update information holding unit.

Access directed to the first data structure is processed according to duplication of the first data structure. For example, in a case where the first data structure is a memory buffer or row-oriented storage format, read access in record units involves writing and reading from the first data structure.

On the other hand, it is desirable that access directed to the second data structure be processed according to duplication of the second data structure. For example, in a case where the second data structure has a row-oriented storage format on a HDD or a column-oriented storage format in memory, access requiring a record with a specific attribute only or access requiring all stored data in sequence, is read from duplicates of the second data structure.

In a case of using the second data structure, when update information is present in an update information holding unit, with access to the second data structure it is not possible to use the latest information. Therefore, when the second data structure is accessed, the distributed storage system first applies update information present in the update information holding unit associated with duplicates of the second data structure, to the second data structure in the sequence in which the update information is held, and the second data structure is assumed to have the latest data. Thereafter, access directed to the second data structure is processed with the second data structure having the latest data, and a result is returned to a client computer.

The time required for access is the sum of the time required to apply accumulated update information to the second data structure and the time required to access the second data structure.

Here, in a case where timing of applying the accumulated update information to the update information holding unit is only when access to the second data structure has been achieved, when the volume of update information is large, access time is very long. Since storage volume of update information in the update information holding unit is limited, in a case where frequency of access to the second data structure is low, there is a risk of update information overflowing in the update information holding unit.

Accordingly, an update condition is provided as a condition for extracting update information, in the update information holding unit, and where the update condition is true, some or all of the stored update information is applied to the second data structure, irrespective of whether or not access to the second data structure has been achieved. As an update condition, for example, a case may be considered where the total data volume of the update information is a fixed amount. As another update condition, a case may be considered where the number of updates of the update information is a fixed number. As a further update condition, a case may be considered where the time elapsed from the previous application of update information has exceeded a fixed time.

Where a single access to the second data structure often takes a very small time, by frequently applying the update information, if the number of update information items accumulated in the update information holding unit is not made small, there is a risk that access performance directed to the second data structure will deteriorate. This is because some or all the time of applying the update information to the second data structure is included in the access time to the second data structure.

On the other hand, where the frequency of access to the second data structure is low and a single access is very long, since the performance of low volume update access with regard to the second data structure is bad, when the frequency of application of the update information is high, more resources of a computer holding duplicates of the second data structure are consumed. In a case where duplicates of the first data structure are present on the same computer, or a case where the same computer is used for another purpose, the performance deteriorates.

The occurrence rate and time of such access often changes with the elapse of operation time. Therefore, if update conditions are not appropriately set according to volume and frequency of access to the first data structure and change in volume and frequency of access to the second data structure, there is a problem in that the performance of the distributed storage system will deteriorate.

Accordingly, in a distributed storage system in which the same data is held in multiple different data structures, it is a problem to enable appropriate adjustment of timing that reflects data updates in respective data storage units in accordance with change in volume and frequency of access suitable to the respective data structures. It is an object of the present invention to provide a distributed storage system, a storage control method and a program to solve this problem.

### [Solution to Problem]

According to a first aspect of the present invention, there is provided a distributed storage system, comprising: a first data storage unit that holds data in a first data structure; a second data storage unit that holds the data in a second data structure different from the first data structure; an update information holding unit that holds an update information item(s) indicating update content of the data, and if a predetermined update condition is satisfied, applies the update information item(s) to the second data storage unit and reflects the update content in the second data storage unit; an update state monitoring unit that monitors the update information item(s) held by the update information holding unit and extracts as an update state an application status of the update information item(s) to the second data storage unit; and an update condition change unit that changes the predetermined update condition based on a change command for changing the predetermined update condition, the change command being determined in accordance with the update state.

According to a second aspect of the present invention, there is provided a storage control method for controlling a distributed storage system comprising a first data storage unit that holds data in a first data structure, a second data storage unit that holds the data in a second data structure different from the first data structure, and an update information holding unit that holds an update information item(s) indicating update content of the data. The storage control method comprises: applying, if a predetermined update condition is satisfied, the update information item(s) to the second data storage unit and reflecting the update content in the second data storage unit; monitoring the update information item(s) held by the update information holding unit and extracting as an update state an application status of the update information item(s) to the second data storage unit; and changing the predetermined update condition based on a change command for changing the predetermined update condition, the change command being determined in accordance with the update state.

According to a third aspect of the present invention, there is provided a program for a computer that controls a distributed storage system comprising a first data storage unit that holds data in a first data structure, a second data storage unit that holds the data in a second data structure different from the first data structure, and an update information holding unit that holds an update information item(s) indicating update content of the data. The program causes the computer to execute: applying, if a predetermined update condition is satisfied, the update information item(s) to the second data storage unit and reflecting the update content in the second data storage unit; monitoring the update information item(s) held by the update information holding unit and extracting as an update state an application status of the update information item(s) to the second data storage unit; and changing the predetermined update condition based on a change command for changing the predetermined update condition, the change command being determined in accordance with the update state.

It is to be noted that the program may be provided as a program product recorded on a non-transitory computer-readable recording medium.

### [Advantageous Effects of Invention]

According to the distributed storage system, storage control method and program, according to the present invention, in a distributed storage system holding the same data in a plurality of different data structures, it is possible to appropriately adjust timing of reflecting data updates in respective data storage units, in accordance with change of volume and frequency of access applied to the respective data structures.

### [Brief Description of Drawings]

[Fig. 1]

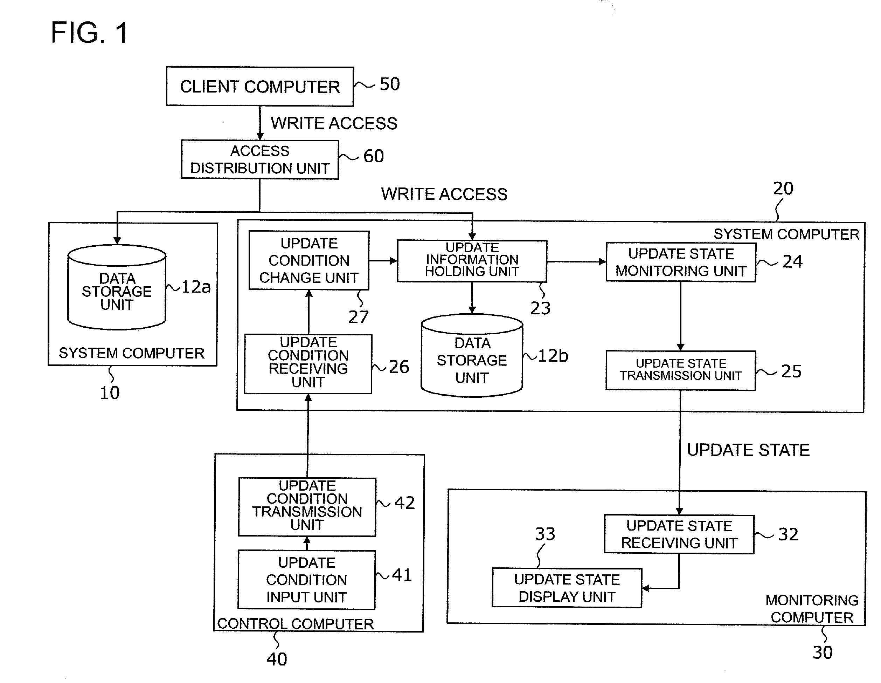

   FIG. 1 is a block diagram showing an example of a configuration of a distributed storage system according to a first exemplary embodiment.
[Fig. 2]

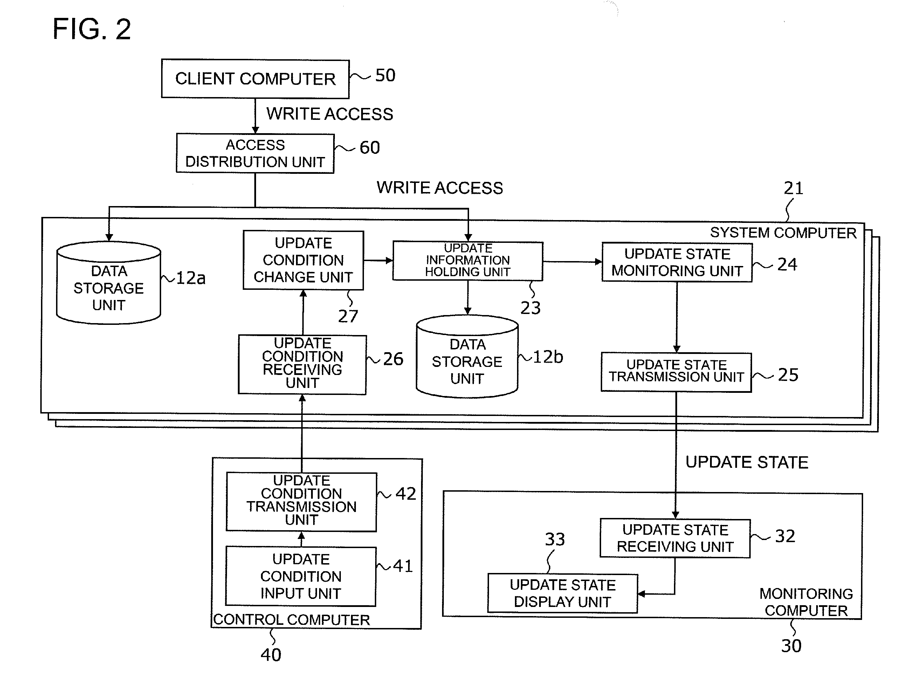

   FIG. 2 is a block diagram showing an example of a configuration where respective storage nodes have a first and a second data storage unit, in the distributed storage system according to the first exemplary embodiment.
[Fig. 3]

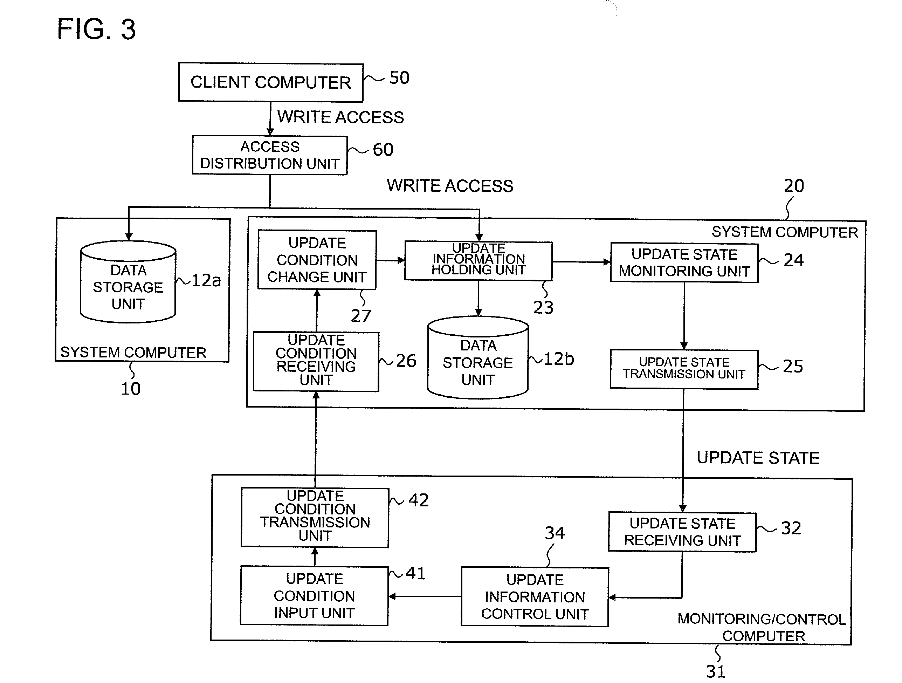

   FIG. 3 is a block diagram showing an example of a configuration of the distributed storage system according to a second exemplary embodiment.
[Fig. 4]

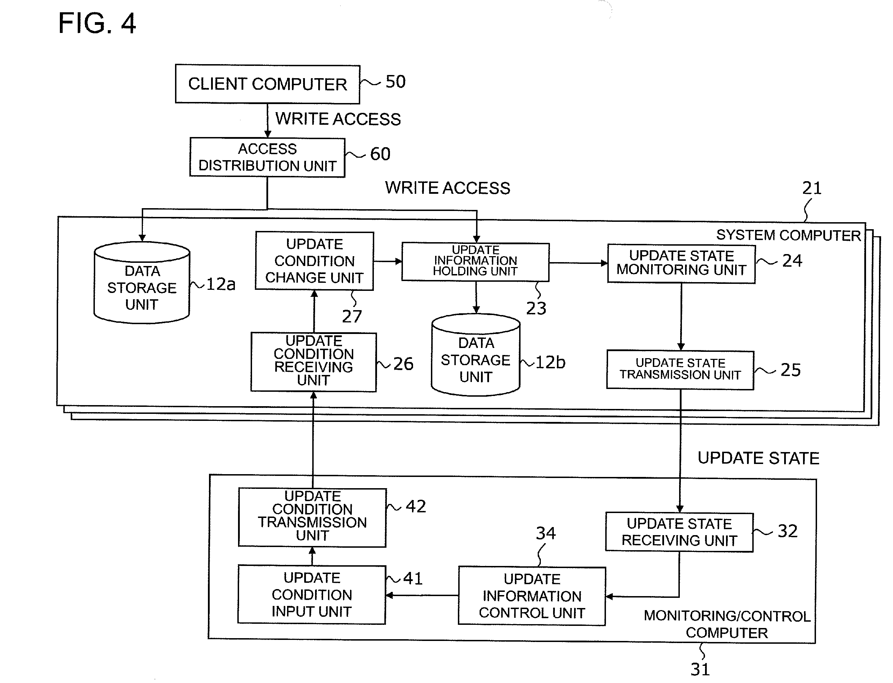

   FIG. 4 is a block diagram showing an example of a configuration where respective storage nodes have a first and a second data storage unit, in the distributed storage system according to the second exemplary embodiment.
[Fig. 5]

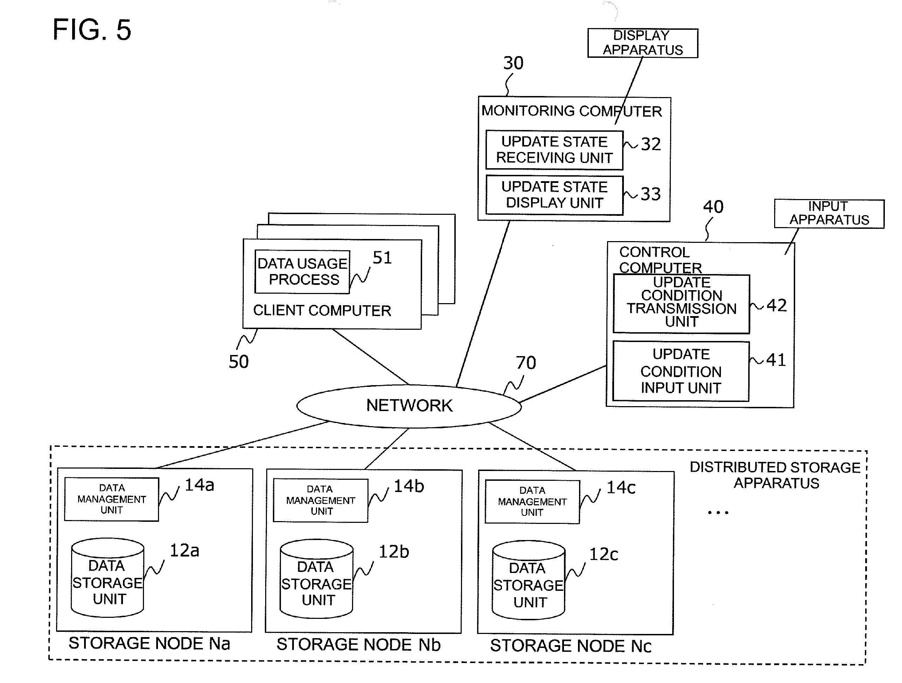

   FIG. 5 is a block diagram showing an example of a configuration of the distributed storage system according to a third exemplary embodiment.
[Fig. 6]

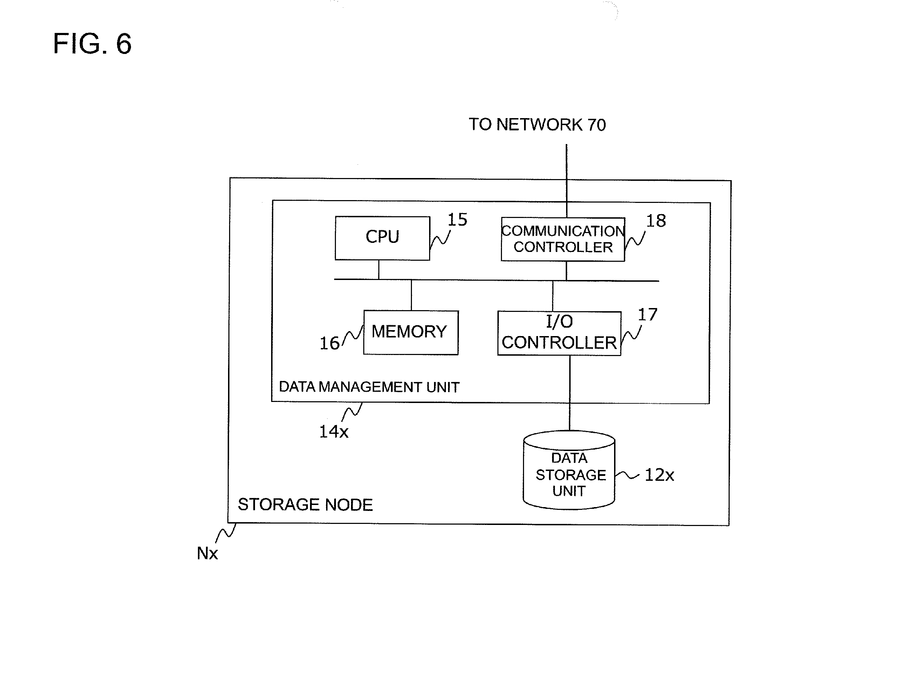

   FIG. 6 is a block diagram showing an example of a configuration of a storage node in the distributed storage system according to the third exemplary embodiment.
[Fig. 7]

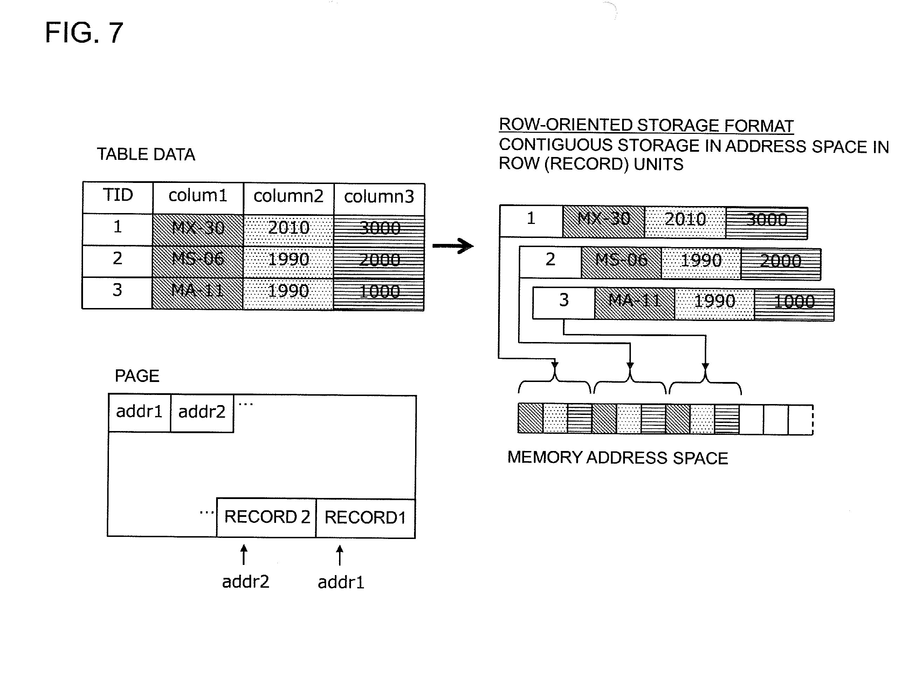

   FIG. 7 is a diagram describing a row-oriented storage format in related technology.
[Fig. 8]

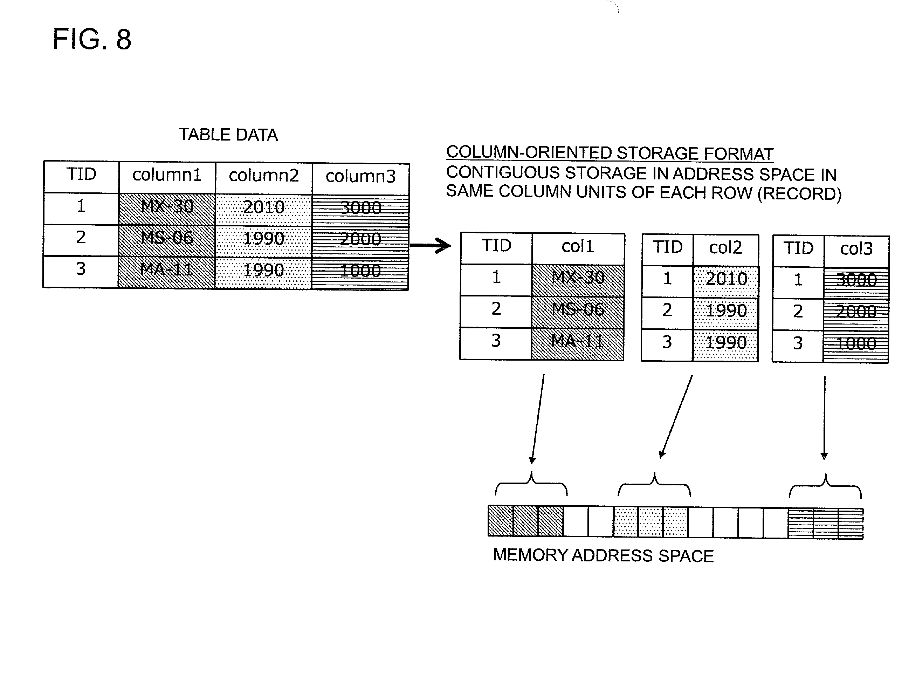

   FIG. 8 is a diagram describing a column-oriented storage format in related technology.
[Fig. 9]

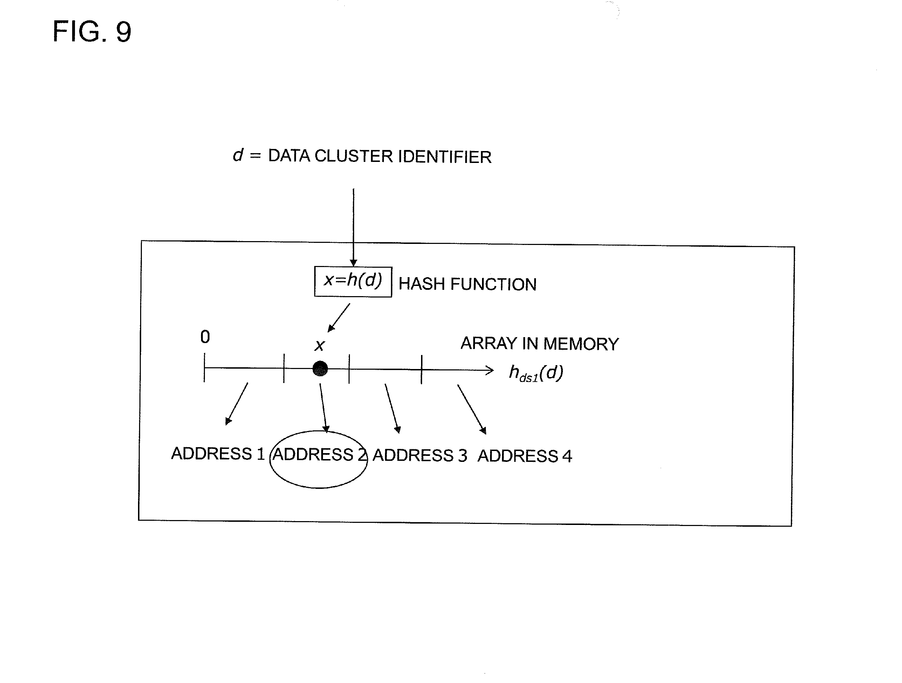

   FIG. 9 is a diagram describing a hashmap format in related technology.
[Fig. 10]

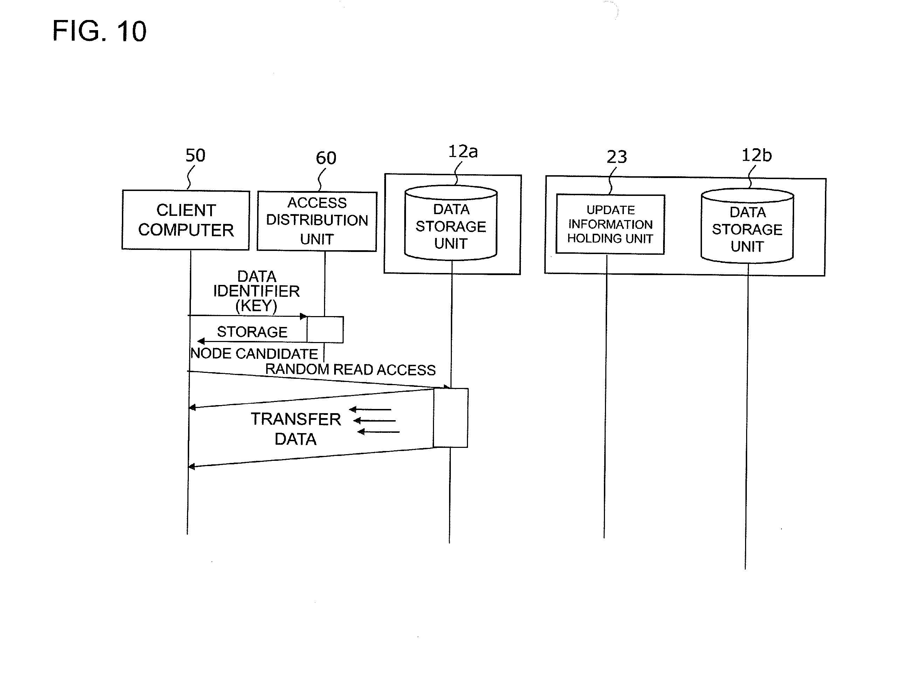

   FIG. 10 is a sequence diagram showing an example of a random read access operation in the distributed storage system according to the third exemplary embodiment.
[Fig. 11]

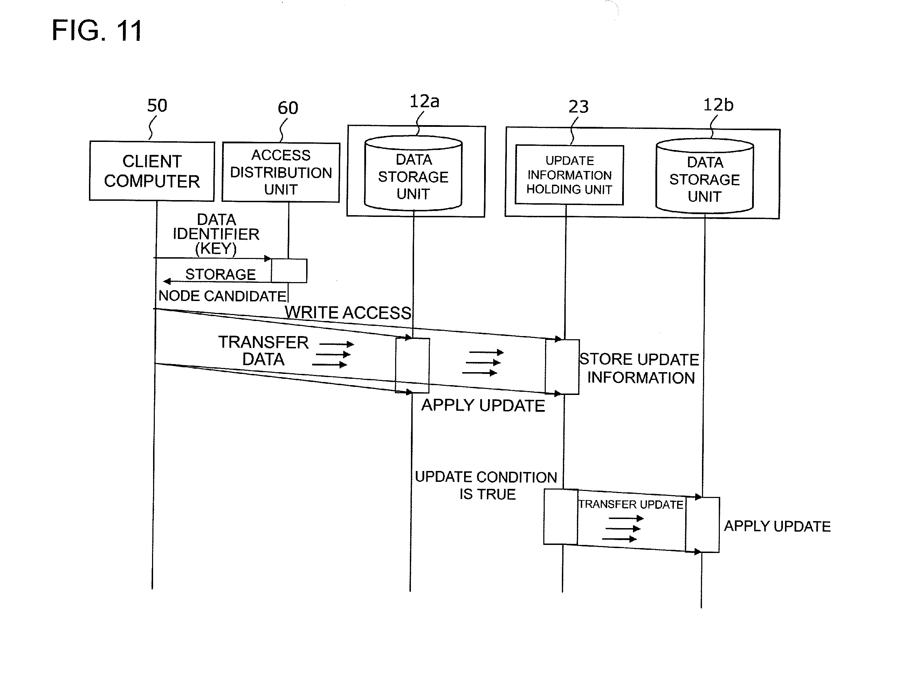

   FIG. 11 is a sequence diagram showing an example of a write access operation in the distributed storage system according to the third exemplary embodiment.
[Fig. 12]

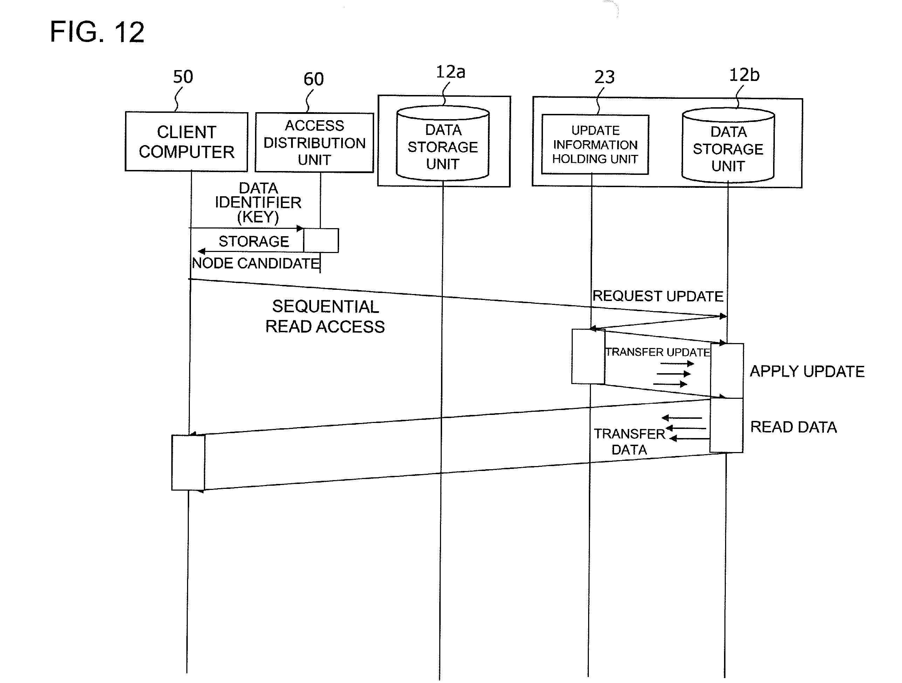

   FIG. 12 is a sequence diagram showing an example of a sequential read access operation in the distributed storage system according to the third exemplary embodiment.
[Fig. 13]

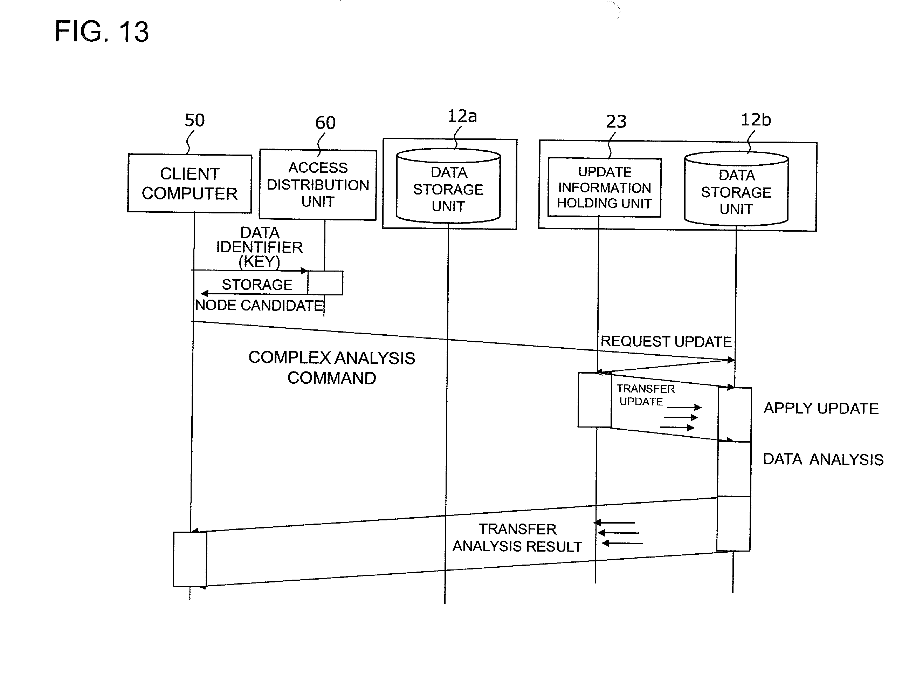

   FIG. 13 is a sequence diagram showing an example of a data analysis access operation in the distributed storage system according to the third exemplary embodiment.
[Fig. 14]

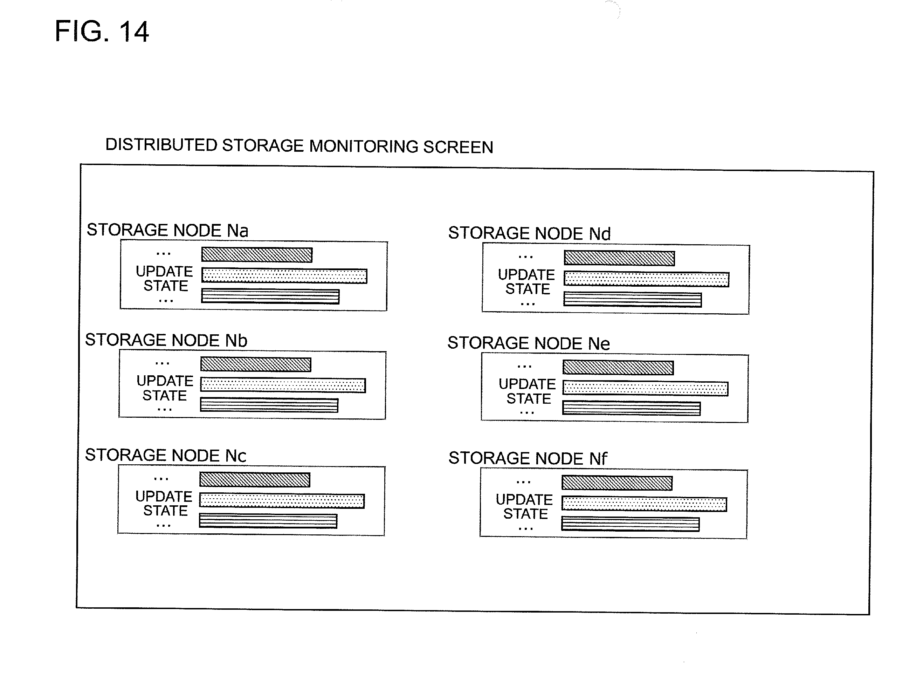

   FIG. 14 is a diagram showing an example of display content of an update state display unit in the distributed storage system according to the third exemplary embodiment.
[Fig. 15]

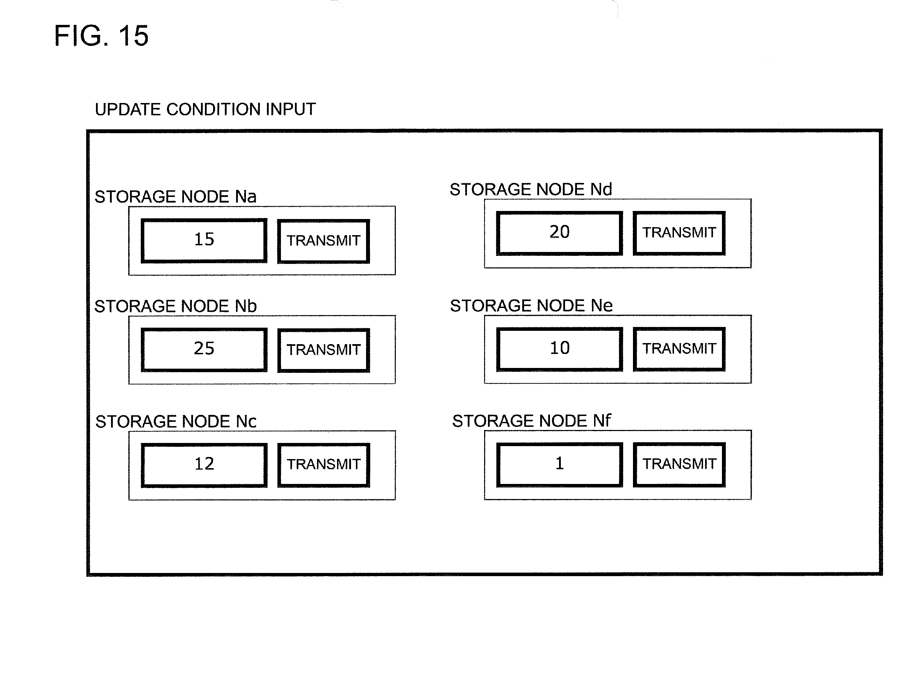

   FIG. 15 is a diagram showing an example of a configuration of an update condition input unit in the distributed storage system according to the third exemplary embodiment.
[Fig. 16]

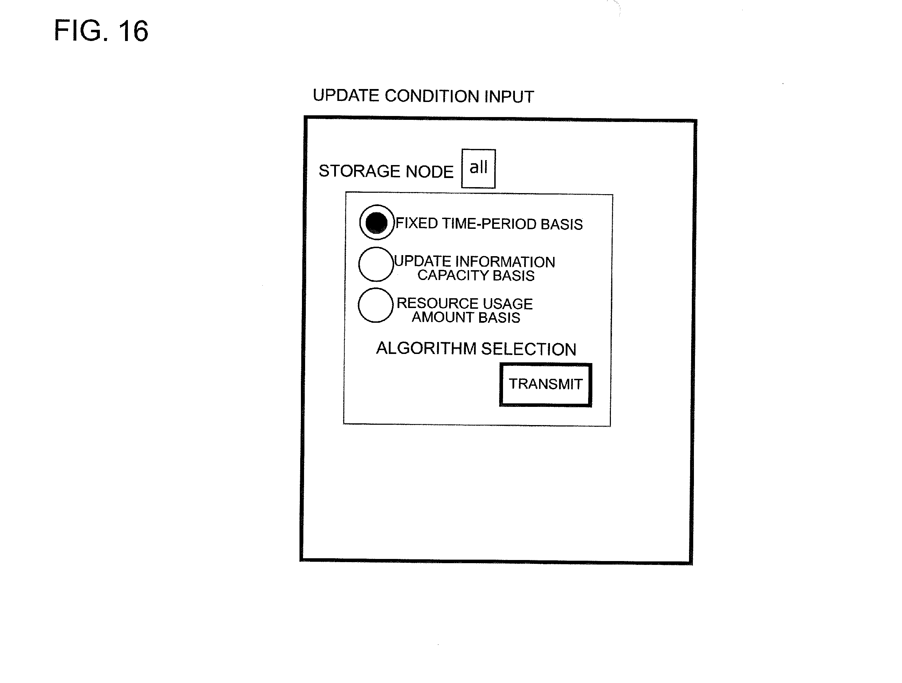

   FIG. 16 is a diagram showing an example of a configuration of an update condition input unit in the distributed storage system according to the third exemplary embodiment.
[Fig. 17]

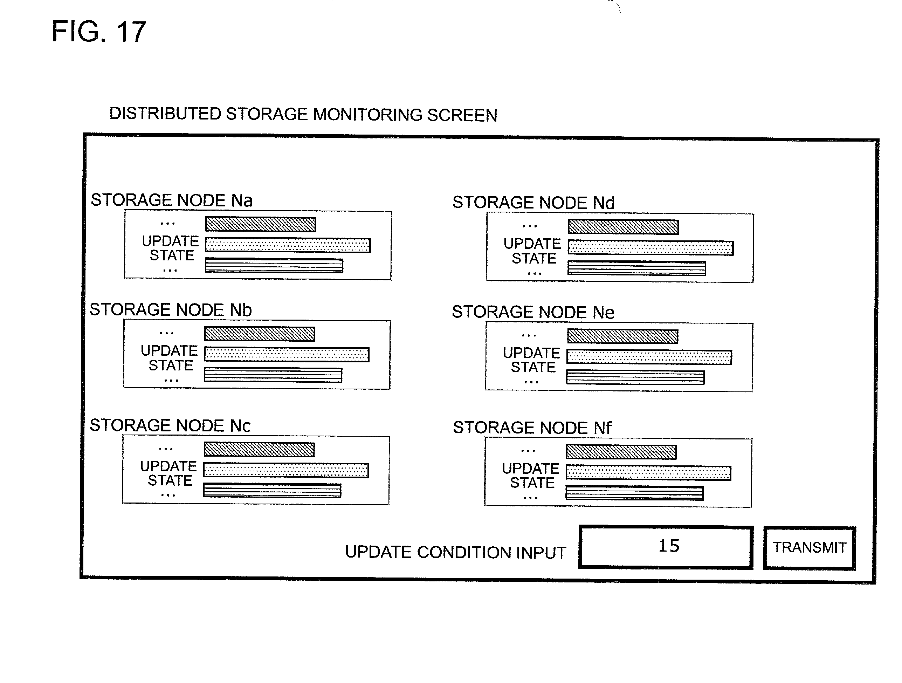

   FIG. 17 is a diagram showing an example of a configuration when the update state display unit and the update condition input unit are simultaneously implemented in the distributed storage system according to the third exemplary embodiment.
[Fig. 18]

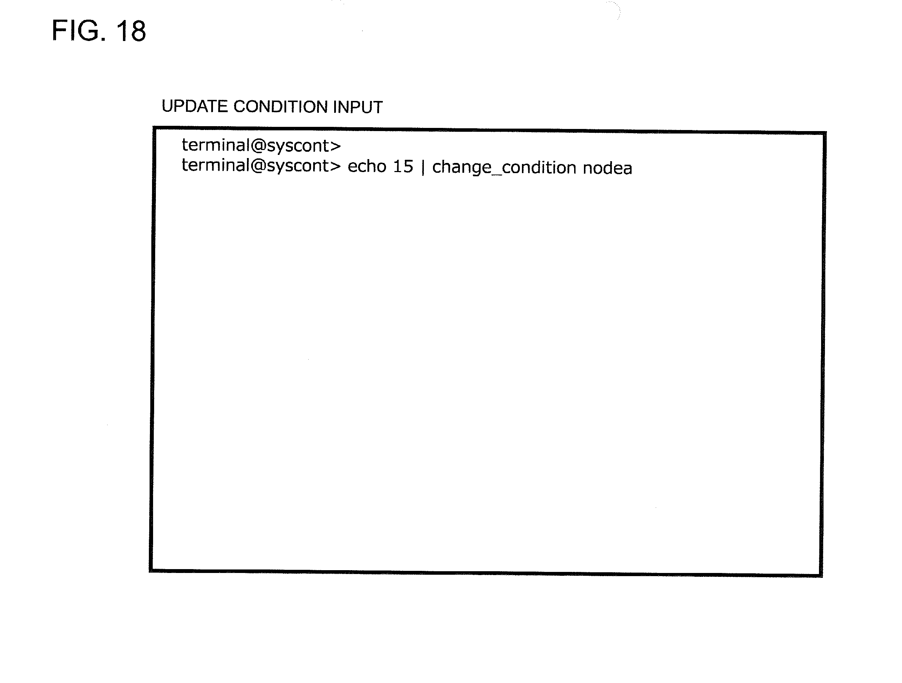

   FIG. 18 is a diagram showing an example of a configuration of the update condition input unit in the distributed storage system according to the third exemplary embodiment.
[Fig. 19]

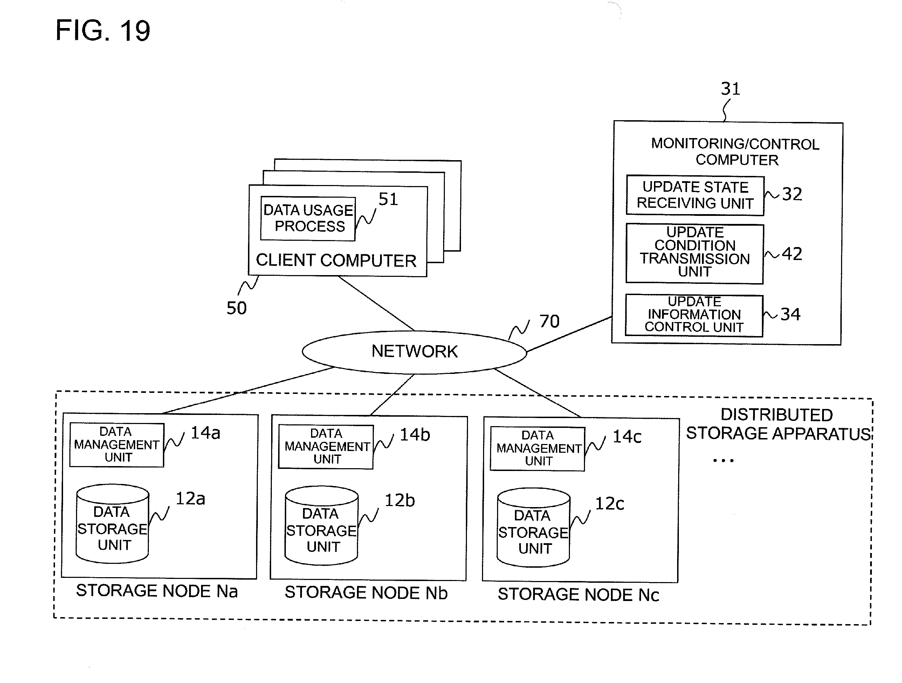

   FIG. 19 is a block diagram showing an example of a configuration of the distributed storage system according to a fourth exemplary embodiment.
[Fig. 20]

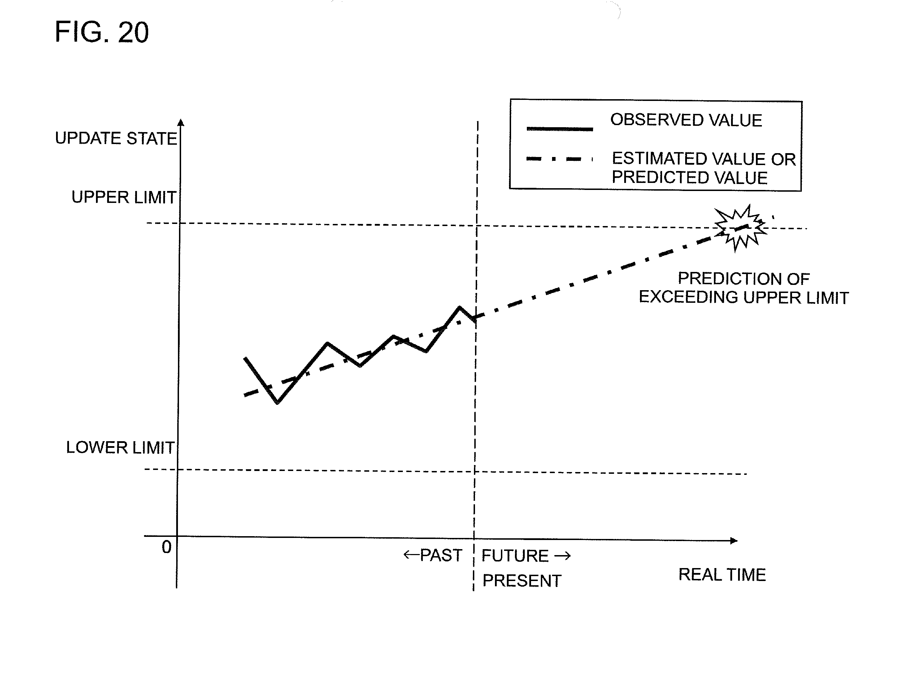

   FIG. 20 is a diagram describing an example of an implementation algorithm of an update information control unit of the distributed storage system according to the fourth exemplary embodiment.
[Fig. 21]

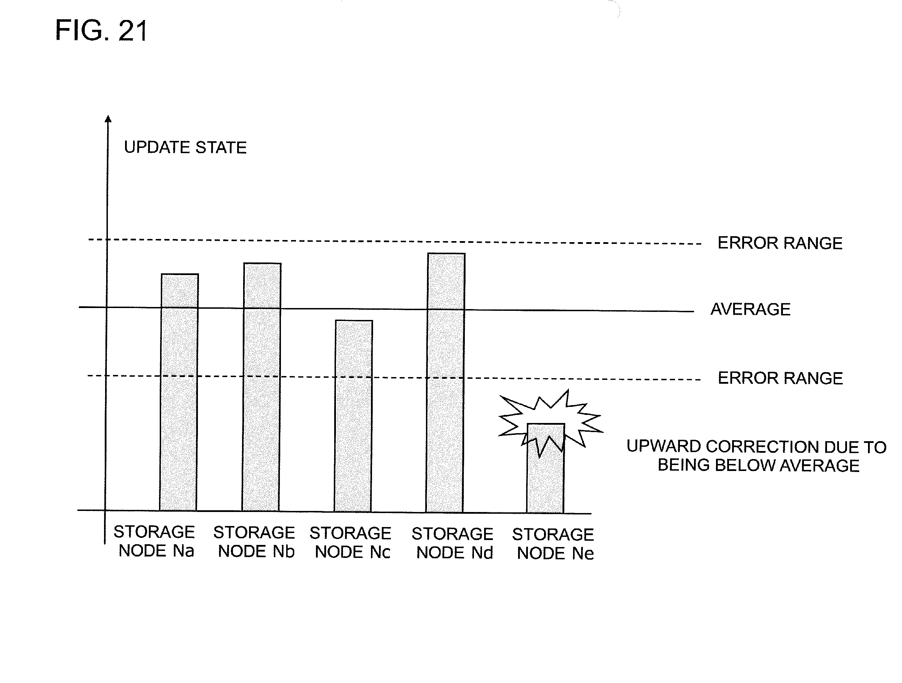

   FIG. 21 is a diagram describing an example of an implementation algorithm of the update information control unit of the distributed storage system according to the fourth exemplary embodiment.

### [Description of Embodiments]

First, a description is given of an overview of a distributed storage system according to an exemplary embodiment. It is to be noted that reference symbols in the drawings attached to this overview are examples solely to aid understanding, and are not intended to limit the present invention to modes illustrated in the drawings.

FIG. 1 is a block diagram showing an example of a configuration of the distributed storage system according to an exemplary embodiment. With reference to FIG. 1, the distributed storage system comprises: a first data storage unit (12a) that holds data in a first data structure; a second data storage unit (12b) that holds the data in a second data structure different from the first data structure; an update information holding unit (23) that holds an update information item(s) indicating update content of the data, and if a predetermined update condition is satisfied, applies the update information item(s) to the second data storage unit (12b) and reflects the update content in the second data storage unit (12b); an update state monitoring unit (24) that monitors the update information item(s) held by the update information holding unit (23) and extracts as an update state an application status of the update information item(s) to the second data storage unit (12b); and an update condition change unit (27) that changes the predetermined update condition based on a change command for changing the predetermined update condition, the change command being determined in accordance with the update state.

With reference to FIG. 1, the distributed storage system may comprise: an update state display unit (33) that displays the update state extracted by the update state monitoring unit (24); and an update condition input unit (41) that receives the change command.

According to the distributed storage system, in a case where the distributed storage system holds the same data in a plurality of different data structures, it is possible to appropriately adjust timing of reflecting data updates in the respective data storage units in accordance with change in volume and frequency of access appropriate to the respective data structures. This is because a manager of the distributed storage system can comprehend an update state displayed in the update state display unit (33), that is, application status of update information to the second data storage unit (12b), and by inputting a change command to change the update condition to the update condition input unit (41), can adjust the update condition.

With reference to FIG. 3, the distributed storage system may comprise an update information control unit (34) that generates the change command in accordance with the update state. Here, the update information control unit (34) may predict based on the update state a number of an update information item(s) to be held by the update information holding unit (23) and generate the change command in accordance with the predicted number. The update information control unit (34) may generate as the change command a command to change a frequency at which the update information item(s) is applied to the second data storage unit (12b). In addition, the update information control unit (34), in a case where the number exceeds a predetermined upper limit, may generate the change command so as to increase the frequency at which the update information item(s) is applied to the second data storage unit (12b), and in a case where the number is less than a predetermined lower limit, generate the change command so as to decrease the frequency.

According to the distributed storage system, in a case where the distributed storage system holds the same data in a plurality of different data structures, it is possible to automatically adjust timing of reflecting data updates in the respective data storage units, in accordance with change in volume and frequency of access appropriate to the respective data structures. This is because the update information control unit (34) generates a change command to change an update condition in accordance with an update state, that is, application status of update information to the second data storage unit (12b), and automatically adjusts the update condition.

In the present invention, the following modes are possible.

### (Mode 1)

A distributed storage system may be the distributed storage system according to the first aspect.

### (Mode 2)

The distributed storage system may comprise: an update state display unit that displays the update state extracted by the update state monitoring unit; and an update condition input unit that receives the change command.

### (Mode 3)

The distributed storage system may comprise a plurality of computers including the first data storage unit, the second data storage unit, the update information holding unit, the update state monitoring unit, and the update condition change unit, wherein the update state display unit may display the update state extracted by the update state monitoring unit(s) included in the plurality of computers.

### (Mode 4)

The update condition input unit may receive the change command corresponding to the update condition change unit(s) included in the plurality of computers.

### (Mode 5)

The update state display unit may display the update information using at least one of a pie chart, a bar chart or a line chart.

### (Mode 6)

The distributed storage system may comprise: an update information control unit that generates the change command in accordance with the update state.

### (Mode 7)

In the distributed storage system, the update information control unit may predict based on the update state a number of an update information item(s) to be held by the update information holding unit and generate the change command in accordance with the number.

### (Mode 8)

In the distributed storage system, the update information control unit may generate as the change command a command to change a frequency at which the update information item(s) is applied to the second data storage unit.

### (Mode 9)

In the distributed storage system, the update information control unit, in a case where the number exceeds a predetermined upper limit, may generate the change command so as to increase the frequency at which the update information item(s) is applied to the second data storage unit, and in a case where the number is less than a predetermined lower limit, may generate the change command so as to decrease the frequency.

### (Mode 10)

The update information control unit may approximate the number of update information item(s) held by the update information holding unit, by a time polynomial, and may estimate the number of update information item(s) to be held in the future by the update information holiday unit, based on the polynomial.

### (Mode 11)

In the distributed storage system, the first data storage unit may be a row-oriented database that holds the data in a row-oriented manner, and the second data storage unit may be a column-oriented database that holds the data in a column-oriented manner.

### (Mode 12)

The first data storage unit may be a Key-Value Store provided in a main memory, and the second data storage unit may be a column-oriented database provided in a main memory.

### (Mode 13)

The data stored in the first data storage unit may be processed by a CPU (Central Processing Unit), and the data stored in the second data storage unit may be processed by a GPU (Graphics Processing Unit).

### (Mode 14)

In the distributed storage system, the update information holding unit may hold as the update information item(s) an update log(s) for a record(s), and the update state monitoring unit may extract as the update state a number of the update log(s) in the update information holding unit.

### (Mode 15)

The update state monitoring unit may extract a time average of the number of update log(s) in the update information holding unit, as the update state.

### (Mode 16)

In the distributed storage system, the second data storage unit may manage the data in a predetermined unit such as an object, a tuple, or a block, and a number of an update information item(s) held by the update information holding unit may increase in accordance with update access or delete access according to the predetermined unit, and may not vary according to refer access according to the predetermined unit.

### (Mode 17)

In a case where refer accesses for multiple data units reach the second data storage unit, the number of update information item(s) held by the update information holding unit may return to zero.

### (Mode 18)

In a case where the predetermined update condition has been satisfied, the number of update information item(s) held by the update information holding unit may return to zero.

### (Mode 19)

The update information holding unit may holds an update log(s) for a record(s) in a first FIFO (First-In First-Out) format, and, in a case where access to the second data storage unit is generated, the update information holding unit may switch to a second FIFO format in which update information is not held, and while applying the update log(s) in the first FIFO format to the second data storage unit, may hold write access from a client computer in the second FIFO format.

### (Mode 20)

A storage control method may be the storage control method according to the second aspect.

### (Mode 21)

The storage control method may comprise: displaying the extracted update state; and receiving the change command.

### (Mode 22)

The storage control method may comprise: generating the change command in accordance with the update state.

### (Mode 23)

The storage control method may comprise: predicting based on the update state a number of an update information item(s) to be held by the update information holding unit and generating the change command in accordance with the number.

### (Mode 24)

The storage control method may comprise: generating as the change command a command to change a frequency at which the update information item(s) is applied to the second data storage unit.

### (Mode 25)

The storage control method may comprise: generating, in a case where the number exceeds a predetermined upper limit, the change command so as to increase the frequency at which the update information item(s) is applied to the second data storage unit, and generating, in a case where the number is less than a predetermined lower limit, the change command so as to decrease the frequency.

### (Mode 26)

In the storage control method, the first data storage unit is a row-oriented database that holds the data in a row-oriented manner, and the second data storage unit is a column-oriented database that holds the data in a column-oriented manner.

### (Mode 27)

In the storage control method, the update information holding unit may hold as the update information item(s) an update log(s) for a record(s), and the extracting may comprise extracting as the update state a number of the update log(s) in the update information holding unit.

### (Mode 28)

In the storage control method, the second data storage unit manages the data in a predetermined unit such as an object, a tuple, or a block, and a number of an update information item(s) held by the update information holding unit increases in accordance with update access or delete access according to the predetermined unit, and does not vary according to refer access according to the predetermined unit.

### (Mode 29)

A program may be the program according to the third aspect.

### (Mode 30)

The program may cause the computer to execute: displaying the extracted update state; and receiving the change command.

### (Mode 31)

The program may cause the computer to execute generating the change command in accordance with the update state.

### (First Exemplary Embodiment)

A description is given concerning a distributed storage system according to a first exemplary embodiment, making reference to the drawings. FIG. 1 is a block diagram showing an example of a configuration of the distributed storage system according to the present exemplary embodiment.

Referring to FIG. 1, the distributed storage system is provided with a first data storage unit 12a, a second data storage unit 12b, an update information holding unit 23, an update state monitoring unit 24, an update state transmission unit 25, an update state receiving unit 32, and update state display unit 33, an update condition input unit 41, an update condition transmission unit 42, an update condition receiving unit 26, and an update condition change unit 27.

The second data storage unit 12b possesses a characteristic (for example, data structure) that is different from the first data storage unit 12a. The update information holding unit 23 holds update information before application to the second data storage unit 12b while an update condition is false, and applies the update information to the second data storage unit 12b when the condition is true. The update state monitoring unit 24 monitors the status of update information held by the update information holding unit 23. The update state transmission unit 25 transmits the update state outputted from the update state monitoring unit 24. The update state receiving unit 32 receives the relevant update state. The update state display unit 33 displays information representing the relevant update state. The update condition input unit 41 receives an update condition change command. The update condition transmission unit 42 transmits the relevant update condition change command. The update condition receiving unit 26 receives the relevant update condition change command. The update condition change unit 27 changes an update condition of the update information holding unit 23 based on the relevant update condition change command.

As shown in FIG. 2, the distributed storage system is provided with at least one system computer 21 that is provided with the first data storage unit 12a and the second data storage unit 12b; the update state receiving unit 32 may receive an update state from at least one update state transmission unit 25, and the update state display unit 33 may display at least one update state.

As shown in FIG. 2, the update condition input unit 41 may receive at least one update condition change command, and the update condition transmission unit 42 may transmit to at least one update condition receiving unit 26 based on at least one update condition change command.

According to the distributed storage system according to the present exemplary embodiment, it is possible to appropriately configure an update condition in response to volume and frequency of access to the first data structure, and to change in volume and frequency of access to the second data structure.

This is because a manager of the distributed storage system can observe/confirm the status of at least one update information holding unit 23, being a resource distribution parameter for access to the first data structure and access to the second data structure; and according to a result thereof, the manager can configure an update condition considered to be suitable for configuring next, and can input at least one change command via the update condition input unit 41. Thus, the update information holding unit 23 can configure an appropriate update condition in accordance with a change command even if an access trend to the distributed storage system changes, and it is possible to reduce computer load when update information is applied.

### (Second Exemplary Embodiment)

A description is given concerning the distributed storage system according to a second exemplary embodiment, making reference to the drawings. FIG. 3 is a block diagram showing an example of a configuration of the distributed storage system according to the present exemplary embodiment.

Referring to FIG. 3, the distributed storage system is provided with a first data storage unit 12a, a second data storage unit 12b, an update information holding unit 23, an update state monitoring unit 24, an update state transmission unit 25, an update information control unit 34, an update condition input unit 41, an update condition transmission unit 42, an update condition receiving unit 26, and an update condition change unit 27.

The second data storage unit 12b possesses a characteristic (for example, data structure) that is different from the first data storage unit 12a. The update information holding unit 23 holds update information before application to the second data storage unit 12b while an update condition is false, and applies the update information to the second data storage unit 12b when the condition is true. The update state monitoring unit 24 monitors the status of update information held by the update information holding unit 23. The update state transmission unit 25 transmits the update state outputted from the update state monitoring unit 24. The update state receiving unit 32 receives the relevant update state. The update information control unit 34 uses at least the relevant update state, and generates an update condition change command as necessary. The update condition input unit 41 receives the relevant update condition change command. The update condition transmission unit 42 transmits the relevant update condition change command. The update condition receiving unit 26 receives the relevant update condition change command. The update condition change unit 27 changes an update condition of the update information holding unit 23 based on the relevant update condition change command.

Referring to FIG. 4, the distributed storage system may be provided with at least one system computer 21 that is provided with a first data storage unit 12a and a second data storage unit 12b, and the update state receiving unit 32 may receive an update state from at least one update state transmission unit 25.

As shown in FIG. 4, the update condition input unit 41 may receive at least one update condition change command, and the update condition transmission unit 42 may transmit to at least one update condition receiving unit 26 based on at least one update condition change command.

In the distributed storage system of the present exemplary embodiment, by generating a change command by the update information control unit 34, it is possible to appropriately configure an update condition without the manager continuously monitoring the update state, even in a system that operates continuously 24 hours a day, 365 days a year.

### (Third Exemplary Embodiment)

A description is given concerning a distributed storage system according to a third exemplary embodiment, making reference to the drawings. FIG. 5 is a block diagram showing an example of a configuration of the distributed storage system according to the present exemplary embodiment.

Referring to FIG. 5, the distributed storage system of the present exemplary embodiment is provided with a distributed storage apparatus having distributed control linked via a network 70, a client computer 50, a monitoring computer 30 and a control computer 40.

By performing access including a data identifier and an identifier representing a data operation, to the distributed storage apparatus, a data usage process 51 in the client computer 50 performs storage of data with regard to one or more data items, acquisition of stored data, updating of stored data, and deletion of stored data.

The monitoring computer 30 is provided with a display apparatus, and an update state receiving unit 32 and an update state display unit 33 as mentioned above are installed. Here, the display apparatus is an apparatus that converts information in a computer into a physical phenomenon which a person can confirm with one or more of the five senses: for example, a display, a printer, a speaker, or the like.

The control computer 40 is provided with an input apparatus, and an update condition input unit 41 and an update condition transmission unit 42 as mentioned above are installed. Here, the input apparatus is an apparatus that converts a person's behavior into information in a computer: for example, a keyboard, a mouse, a touch panel, a camera, a microphone, a heat sensor, or the like.

As shown in FIG. 6, storage nodes Nx (x = a, b, c, ...) are computers provided with at least one CPU 15, at least one memory 16, at least one I/O controller 17, at least one data storage unit 12x, and at least one communication controller 18. The storage node Nx performs transmission and reception of data with regard to the network 70 via the communication controller 18, and storing/reading of required data is performed with the data storage unit 12x via the I/O controller 17. The distributed storage apparatus is configured to include storage nodes Na-Nc. Software that controls the storage node Nx is stored in the memory 16 and is executed by the CPU 15.

The data storage unit 12x (x = a, b, c, ...) is a physical medium that can record data such as a hard disk drive, flash memory, DRAM, MRAM (Magnetoresistive RAM), FeRAM (Ferroelectric RAM), one or more storage apparatuses connected to a RAID (Redundant Arrays of Inexpensive (Independent) Disks) controller, magnetic tape or the like, or a control device that can record data to the medium in question which is disposed outside a storage node.

The memory 16 and the data storage unit 12x may be the same hardware.

The storage nodes Nx (x = a, b, c, ...) are connected to each other by the network 70 and perform transmission and reception of data through the network 70.

The network 70 is realized by an upper level protocol or the like, such as a Fibre Channel, FCoE (Fibre Channel over Ethernet (registered trademark)), Infiniband, TCP/IP (Transmission Control Protocol/Internet Protocol) on Ethernet. Note that methods of implementing the network 70 are not limited to these.

Data recorded in the distributed storage apparatus is stored in a distributed manner in the data storage units 12x among the storage nodes Nx. The data is managed by sets of data clusters of fixed length or arbitrary length and data identifiers representing the data clusters, and with an access distribution unit 60 implemented in a data management unit 14x, access to respective data reaches the storage node Nx holding the data in question. For example, a data cluster is a file, and a data identifier is an i-node number. As another example, a data cluster is a block of 4 kilobytes, and a data identifier is a set of volume name and block number. As another example, a data cluster is a record, and a data identifier is a main key.

For the stored data, a plurality of duplicates are created and stored in mutually different storage nodes Nx. The data management unit 14x determines a data structure of stored data, and the data is stored in the data storage unit 12x.

Here, the data structure is an indicator that determines which address in a device of the data storage unit 12x the data is stored in, and what order the data is recorded in.

For example, in a case where the data structure is a row-oriented database and the data storage unit 12x is main memory, the data to be stored is divided into records, as shown in FIG. 7, and recorded consecutively in a main memory address space. As a method of recording contiguously, a method is known whereby the main memory is divided into fixed lengths called pages for each 4 KB, data is arranged in order from the end of the fixed length, and the start position of the data is stored in order from the start of the page. In a row-oriented database, it is known that high speed access is possible by further storing an index data structure represented by a B-Tree.

In a case where the data structure is a column-oriented database and the data storage unit 12x is main memory, the data to be stored is divided into units of columns and attributes within a record, as shown in FIG. 8, and recorded contiguously in the same column in a main memory address space. As a method of contiguous recording, besides a method in which column content is described in order within a page, there is also a method of abbreviating similar values in a column (Non Patent Literature 1).

Furthermore, in a case where the data structure is a hashmap or key-value store and the data storage unit 12x is main memory, as shown in FIG. 9, data clusters of data to be stored can be recorded contiguously at a certain address, and the start address can be stored in an array within memory having an index calculated based on a hash value of a data identifier.

It is to be noted that that the data structure examples are not limited to these. For example, in a case where the data storage unit 12x is a HDD, SSD or the like, as long as the device can provide a unique contiguous address space, it is possible to use the abovementioned data structure.

With regard to the respective data structures, there exist access methods with good performance and with bad performance.

For example, in a row-oriented database, inserting respective records and reference to respective records is fast because it is possible to use an index structure. On the other hand, in a row-oriented database, access to extract all stored data for some columns only among respective records has bad performance.

In a column-oriented database, processing at high speed is possible for access to extract all stored data for only some columns among respective records, or access to mutually arrange respective records for a certain column value, as is known with regard to JOIN in a relational database. On the other hand, in a column-oriented database, time is required for processing with regard to access to update respective records or to specify data identifiers of respective records, since this involves access of all data identifiers of all records.

Furthermore, in a case where the data structure is a hashmap, specifying a data identifier for record reference or record insertion is fast. On the other hand, in a case where the data structure is a hashmap, specifying a value besides a data identifier to obtain data or specifying a data identifier range to access a record is slow.

In the present exemplary embodiment, good performance and bad performance are relative indicators. Here, with regard to data stored in a certain data structure 1 and data stored in another data structure 2, in a case where throughput or latency with access by a certain access method A for data structure 1 is better than throughput or latency with access by the same access method A for a data storage unit storing the same data in a different data structure 2, data structure 1 with respect to access method A is said to have "better performance."

It is to be noted that as a definition of "better performance," instead of throughput or latency being good, the following is also possible. Namely, access volume or fast access speed is also possible, as with throughput or latency. Furthermore, performance may also relate to environmental burden, where access volume is small, as with low power consumption, few waste products, and the like. In addition, low operating cost is also possible, as with low charges for access and data transmission volume, low speed of consumption of consumable goods. Low data loss rate is also possible, as in good accuracy in products, having additional internal redundant configuration and the like. Furthermore, a combination of these may also be used as a definition of "good performance."

Below, with regard to the two different data structures 1 and 2, an access method in which data structure 1 has better performance is called an access method for data structure 1, and an access method in which data structure 2 has better performance is called an access method for data structure 2. With 3 or more data structures, relative performance is compared in a similar way as with 2 data structures.

Here, some duplicates of the same stored data are stored in different data structures.

For example, 3 duplicates are made of data 1 and are stored in storage nodes Na, Nb and Nc. The data may now be stored in data structure 1 in storage nodes Na and Nb, and may be stored in data structure 2 in storage node Nc. As another example, 4 duplicates are made of data 2 and are stored in storage nodes Nd to Ng. In this case, the data may be stored in data structure 3 in storage node Nd, in data structure 4 in storage node Ne, in data structure 5 in storage node Nf, and in data structure 6 in storage node Ng.

When 1 duplicate of data 1 and data 2 are respectively stored in storage node Na, data 1 may be stored in data structure 1 and data 2 may be stored in data structure 2.

When duplicates of the same data is created (or updated) in different storage nodes, they are updated synchronously. That is, in both the data storage unit 12a in storage node Na and the data storage unit 12b in storage node Nb, after creation of a recordable and accessible data structure has been completed, an update completion notice is sent to a client computer 50.

Here, in a case where 2 or more duplicates are stored in 2 or more different data structures 1, 2, ..., and update access in data identifier units is directed to data structure 1, before storing in data structures 2, ..., the storage node can store a data update in the update information holding unit 23 and return an update completion notice.

The update information holding unit 23 has a type of data structure in which access to add update information, that is, information representing an update, is more suitable than with data structure 2. Update information is information in which access (create, update, delete) to change certain data can be applied, after some time, to data in data structure 2 in a later stage. For example, the update information holding unit 23 may hold, as update information, the data itself to be updated in FIFO in main memory. As another example, the update information holding unit 23 may record a set of pre-update value and post-update value of data and data identifier in a log structure file system on a HDD, in order of access as update information. As long as the update information holding unit 23 satisfies the abovementioned definitions, there is no limitation to these examples. It is to be noted that the applied update information is removed from the update information holding unit 23..

In the update information holding unit 23, an update condition of true or false is set once each time-period. When the update condition is true, the update information holding unit applies some or all stored update information to data structure 2, and updates data structure 2.

The update condition includes an algorithm and parameters. As an example of the update condition algorithm, a case may be considered where the total data volume of the update information is a fixed volume. In this case, the value of the fixed volume is a parameter. As another example of the update condition algorithm, a case may be considered where the number of updates in the update information is a fixed number. In this case, the value of the fixed number is a parameter. As another example of the update condition algorithm, a case may be considered where a fixed time has elapsed after application of the previous update information. Here, the value of the fixed time is a parameter. As another example of the update condition algorithm, a case may be considered where CPU usage rate of a computer holding the second data storage unit is greater than or equal to a fixed rate or is less than a fixed rate. In this case, the fixed rate is a parameter. It is to be noted that the update condition is not limited to these.

In a case where access directed to the second data structure reaches the relevant storage node, irrespective of whether the update condition is true or false, the update information holding unit 23 applies the update information to the second data structure before performing the access processing.

FIG. 10 to FIG. 13 show access sequence in a case of using data (the first date storage unit 12a) with the first data structure, data (the second date storage unit 12b) with the second data structure, and the update information holding unit 23.

In FIG. 10 to FIG. 13, as an example, access to the first data storage unit 12a is for random read and random write access, and access to the second data storage unit 12b for sequential read and complex query. It is to be noted that these access descriptions are given merely for convenience, and access to the respective data storage units is not limited thereto.

FIG. 10 shows random read access. A solution is provided by the random read access being directed to the first data storage unit 12a, by an access distribution unit 60. Therefore, random read access from the client computer 50 reaches the first data storage unit 12a, and data forming a reply to a relevant request is returned from the first data storage unit 12a.

FIG. 11 shows a sequence for write access (access to create, update or delete data). The write access is inputted by the access distribution unit 60 to a computer having a data storage unit holding all duplicates of the relevant data. Since the random write is an access to the first data storage unit 12a, the first data storage unit 12a applies the update as it is. On the other hand, in the second data storage unit 12b, the update information holding unit 23 located in the first stage thereof creates and holds update information from the random write of the relevant data. Next, when the update condition is true, the relevant update information is applied to the second data storage unit 12b.

FIG. 12 shows a sequence for sequential read access. Since the sequential read access is access to the second data storage unit 12b, with the access distribution unit 60, the sequential read access from the client computer 50 reaches the second data storage unit 12b. The second data storage unit 12b applies some or all the update information stored in the update information holding unit 23 that is in the first stage, before the access processing, to the second data storage unit 12b, following the order in a case where there is an order determined by the update information holding unit 23, and the data is updated. Next, the access processing is performed and a result of the access is returned to the client computer 50. In FIG. 12 the access processing is performed after application of the update. It is to be noted that by performing the access processing from data to which an update has not been applied, and appropriately performing exclusive control, it is possible to apply the update while processing the access.

FIG. 13 shows a sequence for complex data analysis. Since the data analysis relates to access to the second data storage unit, similar to a case of sequential read shown in FIG. 12, processing is performed by the second data storage unit and a result is returned to the client computer.

A storage node implementing the update information holding unit 23 is provided with an update state monitoring unit 24 and an update state transmission unit 25.

The update state monitoring unit 24 generates an "update state" as information representing increase or decrease in the volume of update information of the update information holding unit 23. For example, in a case where the second data storage unit 12b manages stored data in data units such as object, tuple, block, or the like, the update state may be that of an increase when a data unit of update access or delete access is stored in the update information holding unit 23. It is also possible that a data unit of refer access is not stored in the update information holding unit 23 or even if stored, the update state does not increase. Furthermore, where refer accesses for multiple data units reach the second data storage unit 12b, the update state may return to zero.

The update state may be a value returning to zero when the update condition becomes true.

The update state may be the number of update information items stored in the update information holding unit 23. Furthermore, the update state may be an average of unit times of the number of update information items stored in the update information holding unit.

The update state may be the update data size total of update information stored in the update information holding unit 23.

Furthermore, the update state may be the maximum number of update information items stored in the update information holding unit 23 in a recent fixed time. The update state may be the minimum number of update information items stored in the update information holding unit 23 in a recent fixed time.

Furthermore, the update state may be a % value obtained by dividing the number of update information items stored in the update information holding unit 23 by the maximum number of update information items that can be stored in the update information holding unit 23.

The update state may be a value obtained by dividing the number of update information items by the difference between times at which storage is done with respect to the latest update information and the oldest update information stored in the update information holding unit 23.

Furthermore, the update state may be the value of a function f(x) that monotonically increases with respect to x, when the update state exemplified above is x. The update state may be the value of a function g(x) that monotonically decreases with respect to x, when the update state exemplified above is x.

Furthermore, the update state may be a probability value representing the probability that there was a change within a recent fixed time-period, as a result of performing a change time estimation with respect to a time series x1, x2, ..., x_n, at which the update state exemplified above is taken each fixed time-period. It is to be noted that as an example of a change time estimation algorithm, it is possible to use a method of calculating AIC (Akaike's Information Criterion) for each of a plurality of small intervals of a time series, as described in Non Patent Literature 4.

The update state may be a value that becomes 1 when, with respect to a time series x1, x2, ..., x_n, at which the update state exemplified above is taken each fixed time-period, the latest x_n deviates by a certain determined proportion from the average of the preceding x1, x2, ..., x_n-1.

The update state transmission unit 25 transmits the update state obtained by the update state monitoring unit 24 to the update state receiving unit 32 installed in the monitoring computer 30. The update state transmission unit 25 may transmit the update state periodically. The update state transmission unit 25 may transmit the latest update state when there is a request from the update state receiving unit 32. The update state transmission unit 25 may transmit the latest value only, as the update state. Furthermore, the update state transmission unit 25 may transmit zero or more values obtained within the latest fixed time-period, as the update state. The update state transmission unit 25 may transmit 1 or more of the latest fixed number of values obtained, as the update state.

In the monitoring computer 30, a received update state is displayed by the update state display unit 33. The display converts to a format by which a person can comprehend the size of the update state or whether or not there is a time change, and performs execution.

FIG. 14 shows an example display by the update state display unit 33. In FIG. 14, the update state display unit 33 presents information including the size of the update state via a Web screen or the like. In FIG. 14, the update state display unit 33 displays the update state as a bar chart. In this case, it is possible to comprehend the size of the update state based on the length of the bar chart in a lateral direction.

The update state display unit 33 may display the update state together with past values by a line chart. Furthermore, the update state display unit 33 may represent the update state by a pie chart with a predetermined value as 100%. The update state display unit 33 may display the update state by an icon showing that there has been a trend change in a recent fixed time-period. The update state display unit 33 may represent the update state by speech synthesis that reads a numerical value.

A person (a system manager in many cases, but there is no limitation here) who reads the update state from the update state display unit 33 inputs the update condition by the update condition input unit 41 of the control computer 40, as necessary. The update condition input unit 41 provides a function for a person to input how the update condition has changed.

FIG. 15 shows an example of a configuration of the update condition input unit 41. With the update condition input unit 41 shown in FIG. 15, it is possible to change a currently set update condition parameter via a Web screen or the like. In FIG. 15, an update condition can be set for each storage node; it is possible to change the current value of a text box to which a label of the relevant storage node is attached, and by selecting a transmit button, an update condition change command can be inputted.

FIG. 16 shows an example of another configuration of the update condition input unit 41. According to the update condition input unit 41 shown in FIG. 16, it is possible to change the update condition algorithm via a Web screen or the like. In FIG. 16, it is possible to specify a storage node by a text box specifying a storage node number, and to specify a change of algorithm by an exclusive radio button that selects the algorithm, and by selecting a transmit button, an update condition change command can be inputted. Furthermore, it is possible not only to set an update condition change command for each individual storage node, but also to collectively set update conditions of the update information holding unit 23 operating in a plurality of storage nodes, as exemplified in FIG. 16.

FIG. 17 shows an example of another configuration of the update condition input unit 41. Where the monitoring computer 30 and the control computer 40 are the same computer, as in FIG. 17, a case is shown where the update state display unit 33 and the update condition input unit 41 are provided in the same screen.

As another example of the update condition input unit 41, a change parameter may be inputted by voice from a microphone, and the update condition change command may be inputted based on a voice synthesized value.

FIG. 18 shows an example of another configuration of the update condition input unit 41. In FIG. 18, a change value is inputted from a command prompt of the control computer 40, and a change condition_command corresponding to the update condition transmission unit 42 is inputted, with a destination nodea as an argument, by an inter-process communication function possessed by an OS (Operating System).

As another example of the update condition input unit 41, a change parameter may be inputted by voice from a microphone, and an update condition change command may be inputted based on a voice synthesized value.

The inputted update condition change command is inputted to the update condition change unit 27 via the update condition receiving unit 26 of a storage node, from the update condition transmission unit 42 of the control computer 40.

The update condition change unit 27changes a parameter or algorithm for an update condition, or both thereof, with regard to timing at which the update information holding unit 23 applies update information.

According to the distributed storage system of the present exemplary embodiment provided with the abovementioned configuration, it is possible to appropriately change an update condition in accordance with a change in access trend.

For example, in a case where data analysis access has been newly inputted with respect to a distributed storage apparatus already operating with random read and random write only, since the manager knows about access trend change, at the time at which the access trend changes it is possible to comprehend update information volume within the update information holding unit 23 based on the update state, and a judgment can be made as to whether or not the update condition should be changed, and to what level the update frequency should be raised in a case of change. Since the manager can obtain the update state after change from the update state display unit 33, in a case where the changed update condition is not appropriate, it is possible to comprehend that the update state is not appropriate, and the update condition can be changed again.

In a case where the monitoring computer 30 can display not only the update state but also access performance and other performance indicators of the client computer 50, the usability of the distributed storage system of the present exemplary embodiment is further improved. For example, in a case where the access performance of the client computer 50 decreases, based on the update state display unit 33 it is possible to comprehend how the state of the update information holding unit 23 differs from before, and in a case where the update information holding unit 23 is the cause of the access performance decrease, it is possible to change the update information of the update information holding unit 23 via the update condition change unit 27 and to restore the access performance.

### (Fourth Exemplary Embodiment)

A description is given concerning a distributed storage system according to a fourth exemplary embodiment, making reference to the drawings. FIG. 19 is a block diagram showing an example of a configuration of the distributed storage system according to the present exemplary embodiment.

Referring to FIG. 19, the distributed storage system according to the present exemplary embodiment is provided with a monitoring/control computer 31 that implements an update state receiving unit 32, an update condition transmission unit 42 and an update information control unit 34, instead of a control computer 40 and a monitoring computer 30 in the distributed storage system (FIG. 5) according to the third exemplary embodiment.

Other elements of the distributed storage system of the present exemplary embodiment are similar to the distributed storage system (FIG. 5) according to the third exemplary embodiment.

The update information control unit 34 of the present exemplary embodiment creates an update condition change command if necessary, based on an update state received from the update state receiving unit 32, to be inputted to the update condition change unit 27 of a storage node, via the update condition transmission unit 42.

As an example of the update information control unit 34, employing an algorithm that uses an upper limit and lower limit for an update state may be considered. A description is given concerning operation of the update information control unit 34, making reference to FIG. 20. The upper limit and lower limit for update state values are determined in the update information holding unit 23 with respect to a data storage unit 12x of a certain storage node (storage node Nx). For example, in a case where the update state is the number of update information items in the update information holding unit 23, the lower limit may be 0 and the upper limit may be the maximum number of update information items that can be stored within the update information holding unit 23.

The update information control unit 34 continues observation of the update state and, with values thereof as a time series, predicts a future value. For example, the update information control unit 34 can predict a future value by using a least-squares method, with a time series approximating a linear function where input of observed time is t and output is s*t+u.

As another example, the update information control unit 34 may predict an update state based on a more complex time series analysis. As an example, Non Patent Literature 4 describes a time series prediction method of obtaining a parameter that approximates a time series most closely in respective models, by fitting a trend model and periodic model to a state space model and using maximum likelihood estimation and an information volume reference. The update information control unit 34 may use the relevant time series prediction method to predict an update state.

In a case where a predicted future value exceeds the upper limit within a certain time, the update information control unit 34 preferably generates an update condition change command to be issued to the update condition transmission unit 42, so that the frequency at which the update condition is true increases.

In a case of a condition where the update condition is true each given time-period t1, for example, the update information control unit 34 issues a command to change to time-period t2 where t1>t2. In a case where the update condition is true when a certain given number n1 of update information items are stored in the update information holding unit 23, the update information control unit 34 issues a command so that the number n2, where n1>n2, is newly set.

In a case where a predicted future value is less than the lower limit within a certain time, the update information control unit 34 preferably generates an update condition change command to be issued to the update condition transmission unit 42, so that the frequency at which the update condition is true decreases.

In a case of a condition where the update condition is true each given time-period t1, for example, the update information control unit 34 issues a command to change to time-period t3, where t1<t3. In a case where the update condition is true when a certain given number n1 of update information items are stored in the update information holding unit 23, the update information control unit 34 issues a command so that the number n3, where n1<n3, is newly set.

As another example of the update information control unit 34, consideration may be given to using an algorithm that corrects deviation of update states of the respective storage nodes. The update information control unit 34 obtains the update state from 2 or more storage nodes present in the distributed storage system. The update information control unit 34 calculates the average of values of the obtained update states, and in a case where there is a storage node indicating an update state that deviates largely from the average value, issues an update condition change command to change the update condition of the relevant storage node.

When the update information control unit 34 detects a large deviation from the average value, it may detect, for example, a condition in which a certain predetermined proportion is exceeded, a certain predetermined fixed value is exceeded, a certain predetermined proportion continues to be exceeded beyond a fixed time-period, or the like.

FIG. 21 shows an update state of storage nodes Na-Ne. In a case of the update state shown in FIG. 21, by observing the update state of storage nodes Na-Ne, the update information control unit 34 detects that the update state of storage node Ne deviates from the average. In this case, the update information control unit 34 issues an update condition change command to the update information holding unit 23 of the storage node Ne.

With a distributed storage apparatus according to the present exemplary embodiment, similar to the distributed storage apparatus of the third exemplary embodiment, it is possible to appropriately change an update condition in accordance with a change in access trend.

According to the present exemplary embodiment, since it is not necessary for a system manager to constantly monitor the system as in the third exemplary embodiment, it is possible to reduce human resource costs. According to the present exemplary embodiment, in comparison to the third exemplary embodiment, it is possible to reset time-wise fine-graded update conditions. It is to be noted that in a case of giving consideration to information input to the update information control unit 34 and the fact that computational capability thereof is limited, the third exemplary embodiment is preferred, whereby an appropriate value can be set based on human knowledge.

The distributed storage system according to the abovementioned exemplary embodiments may be applied, for example, to a parallel database, a parallel data processing system, distributed storage, a parallel file system, a distributed database, a data grid, a cluster computer, or the like.

It is to be noted that the various disclosures of the abovementioned Patent Literature and the Citation List are incorporated herein by reference thereto. Modifications and adjustments of exemplary embodiments may be made within the bounds of the entire disclosure (including the scope of the claims) of the present invention, and also based on fundamental technological concepts thereof. Furthermore, various combinations and selections of various disclosed elements (including respective elements of the respective claims, respective elements of the respective exemplary embodiments, respective elements of the respective drawings, and the like) are possible within the scope of the claims of the present invention. That is, the present invention clearly includes every type of transformation and modification that a person skilled in the art can realize according to the entire disclosure including the scope of the claims and to technological concepts thereof. In particular, with regard to numerical ranges described in the present specification, arbitrary numerical values or small ranges included in the relevant ranges should be interpreted to be specifically described even where there is no particular description thereof.

### [Reference Signs List]

- 10, 20, 21: system computer
- 12, 12a-12c, 12x, 22: data storage unit
- 14a-14c, 14x: data management unit
- 15: CPU (Central Processing Unit)
- 16: memory
- 17: I/O controller
- 18: communication controller
- 23: update information holding unit
- 24: update state monitoring unit
- 25: update state transmission unit
- 26: update condition receiving unit
- 27: update condition change unit
- 30: monitoring computer
- 31: monitoring/control computer
- 32: update state receiving unit
- 33: update state display unit
- 34: update information control unit
- 40: control computer
- 41: update condition input unit
- 42: update condition transmission unit
- 50: client computer
- 51: data usage process
- 60: access distribution unit
- 70: network
- Na-Nf, Nx: storage node

## Claims

1. A distributed storage system, comprising:
a first data storage unit that holds data in a first data structure;
a second data storage unit that holds the data in a second data structure different from the first data structure;
an update information holding unit that holds an update information item(s) indicating update content of the data, and if a predetermined update condition is satisfied, applies the update information item(s) to the second data storage unit and reflects the update content in the second data storage unit;
an update state monitoring unit that monitors the update information item(s) held by the update information holding unit and extracts as an update state an application status of the update information item(s) to the second data storage unit; and
an update condition change unit that changes the predetermined update condition based on a change command for changing the predetermined update condition, the change command being determined in accordance with the update state.

2. The distributed storage system according to claim 1, comprising:
an update state display unit that displays the update state extracted by the update state monitoring unit; and
an update condition input unit that receives the change command.

3. The distributed storage system according to claim 1, comprising:
an update information control unit that generates the change command in accordance with the update state.

4. The distributed storage system according to claim 3, wherein the update information control unit predicts based on the update state a number of an update information item(s) to be held by the update information holding unit and generates the change command in accordance with the number.

5. The distributed storage system according to claim 4, wherein
the update information control unit generates as the change command a command to change a frequency at which the update information item(s) is applied to the second data storage unit.

6. The distributed storage system according to claim 5, wherein the update information control unit, in a case where the number exceeds a predetermined upper limit, generates the change command so as to increase the frequency at which the update information item(s) is applied to the second data storage unit, and in a case where the number is less than a predetermined lower limit, generates the change command so as to decrease the frequency.

7. The distributed storage system according to any one of claims 1 to 6, wherein
the first data storage unit is a row-oriented database that holds the data in a row-oriented manner, and
the second data storage unit is a column-oriented database that holds the data in a column-oriented manner.

8. The distributed storage system according to any one of claims 1 to 7, wherein
the update information holding unit holds as the update information item(s) an update log(s) for a record(s), and
the update state monitoring unit extracts as the update state a number of the update log(s) in the update information holding unit.

9. The distributed storage system according to any one of claims 1 to 8, wherein
the second data storage unit manages the data in a predetermined unit such as an object, a tuple, or a block, and
a number of an update information item(s) held by the update information holding unit increases in accordance with update access or delete access according to the predetermined unit, and does not vary according to refer access according to the predetermined unit.

10. A storage control method for controlling a distributed storage system comprising a first data storage unit that holds data in a first data structure, a second data storage unit that holds the data in a second data structure different from the first data structure, and an update information holding unit that holds an update information item(s) indicating update content of the data, the storage control method comprising:
applying, if a predetermined update condition is satisfied, the update information item(s) to the second data storage unit and reflecting the update content in the second data storage unit;
monitoring the update information item(s) held by the update information holding unit and extracting as an update state an application status of the update information item(s) to the second data storage unit; and
changing the predetermined update condition based on a change command for changing the predetermined update condition, the change command being determined in accordance with the update state.

11. The storage control method according to claim 10, comprising:
displaying the extracted update state; and
receiving the change command.

12. The storage control method according to claim 10, comprising:
generating the change command in accordance with the update state.

13. The storage control method according to claim 12, comprising:
predicting based on the update state a number of an update information item(s) to be held by the update information holding unit and generating the change command in accordance with the number.

14. The storage control method according to claim 13, comprising:
generating as the change command a command to change a frequency at which the update information item(s) is applied to the second data storage unit.

15. The storage control method according to claim 14, comprising:
generating, in a case where the number exceeds a predetermined upper limit, the change command so as to increase the frequency at which the update information item(s) is applied to the second data storage unit, and generating, in a case where the number is less than a predetermined lower limit, the change command so as to decrease the frequency.

16. The storage control method according to any one of claims 10 to 15, wherein
the first data storage unit is a row-oriented database that holds the data in a row-oriented manner, and
the second data storage unit is a column-oriented database that holds the data in a column-oriented manner.

17. The storage control method according to any one of claims 10 to 16, wherein
the update information holding unit holds as the update information item(s) an update log(s) for a record(s), and
the extracting comprises extracting as the update state a number of the update log(s) in the update information holding unit.

18. The storage control method according to any one of claims 10 to 17, wherein
the second data storage unit manages the data in a predetermined unit such as an object, a tuple, or a block, and
a number of an update information item(s) held by the update information holding unit increases in accordance with update access or delete access according to the predetermined unit, and does not vary according to refer access according to the predetermined unit.

19. A program for a computer that controls a distributed storage system comprising a first data storage unit that holds data in a first data structure, a second data storage unit that holds the data in a second data structure different from the first data structure, and an update information holding unit that holds an update information item(s) indicating update content of the data, the program causing the computer to execute:
applying, if a predetermined update condition is satisfied, the update information item(s) to the second data storage unit and reflecting the update content in the second data storage unit;
monitoring the update information item(s) held by the update information holding unit and extracting as an update state an application status of the update information item(s) to the second data storage unit; and
changing the predetermined update condition based on a change command for changing the predetermined update condition, the change command being determined in accordance with the update state.
